# EUROPEAN PATENT APPLICATION

(11) **EP 1 477 844 A1**
(43) Date of publication of application: **17.11.2004**
(21) Application number: 04252722.6
(22) Date of filing: 11.05.2004
(51) Int. Cl.: G03B 7/26, G03B 17/02

(54) **Battery for use in lens-fitted photo film unit**

(30) Priority: 13.05.2003 JP 2003134853; 16.05.2003 JP 2003139163; 09.07.2003 JP 2003194568; 25.09.2003 JP 2003333693
(71) Applicant: Fuji Photo Film Co., Ltd., Kanagawa (JP)
(72) Inventor: Noguchi, Osamu, Minami-Ashigara-shi, Kanagawa-ken (JP); Kameyama, Nobuyuki, Minami-Ashigara-shi, Kanagawa-ken (JP); Katsura, Hirofumi, Minami-Ashigara-shi, Kanagawa-ken (JP); Tobise, Manabu, Minami-Ashigara-shi, Kanagawa-ken (JP); Ushiro, Seimei, Asaka-shi, Saitama (JP)
(74) Representative: Stevens, Jason Paul

(57) **Abstract**

Disclosed is a lens-fitted photographic film (2) unit containing a roll of unexposed photographic film (26). The lens-fitted photo film unit (2) uses a specific battery (41) of a different size or shape from conventional standardized batteries. A hollow protrusion (19a) is formed in a battery holding room. A hollow (50) of the hollow protrusion joins with a dark room for the photographic film. If the hollow protrusion (19a) is cut away with the intention to put a conventional battery in the battery holding room, the light-tightness of the dark room (45) is destroyed. When a cartridge chamber bottom lid (135) is opened to remove a film cartridge (25), an interconnection lever (138) transmits the opening movement of the lid to a sliding plate (140). Then the sliding plate (140) turns a charge switch (33) of a flash circuit (30) ON, and locks the charge switch (33) in the ON position.

## Description

### FIELD OF THE INVENTION

The present invention relates to a lens-fitted photo film unit that can use only a specific battery as its power source, and more particularly to a lens-fitted photo film unit that has a device for preventing illegal reuse of its unit body. The present invention relates also to the specific battery for the lens-fitted photo film unit.

### BACKGROUND OF THE INVENTION

Lens-fitted photo film units are known as a device that is preloaded with a strip of unexposed photographic film so as to allow photography at the instant of its purchase. After all pictures have been taken, the lens-fitted photo film unit is brought into a photo-lab, to remove and process the exposed photographic film for development and printing. After the exposed photographic film is removed at the photo-lab, the used lens-fitted photo film unit is collected by the manufacturer of that lens-fitted photo film unit, in order to reuse some parts and recycle some parts as materials.

For reuse, mechanical shutter devices, electric flash devices and optical lens systems are picked up for cleaning, repair and inspection processes. Only those determined to be reusable are reused as parts for newly producing lens-fitted photo film units. In the recycling processes, paper labels and plastic wrappings are sorted according to their materials, to reproduce recycled paper or plastic row materials.

Because of the strict cleaning, repair and inspection processes, the lens-fitted photo film units including the reused parts still maintain the high quality of totally new lens-fitted photo film units.

Conventional lens-fitted photo film units usually contain an AA-size or AAA-size dry battery. The dry battery is mainly used as a power source for the flash device of the lens-fitted photo film unit. As compared to the other parts of the lens-fitted photo film unit, the dry battery contained in the lens-fitted photo film unit is relatively big and heavy. Therefore, the way of arranging the dry battery is important in making the lens-fitted photo film unit compact and handy.

Japanese Laid-open Patent Application No. 10-254033 discloses a suggestion for the compactness of the lens-fitted photo film unit. A unit body of this prior art consists of a lens barrel portion holding a photographic lens, a cartridge chamber holding a film cartridge and a scroll chamber holding a roll of photographic film, and a dry battery is disposed in a spacing between the lens barrel portion and the cartridge chamber, whereas a main capacitor of a flash device is disposed on the opposite side from the dry battery, that is, in a spacing between the lens barrel portion and the scroll chamber. This way, the space efficiency is improved, so the body size of the lens-fitted photo film unit is minimized.

Recently the flash circuit has been gaining power-saving features for the purpose of reducing environmental burdens. So the power source to the flash circuit is expected to change over from the AA-size battery to the smaller AAA-size battery or a battery of a smaller size than the AAA-size, for the purpose of reducing carbon dioxide emissions.

Meanwhile, there are so-called reloaded lens-fitted photo film units in the market. The reloaded photo film units are produced by third parties other than the legal manufacturer of the lens-fitted photo film units. They collect bodies of used lens-fitted photo film units after the exposed photo film cartridge have been removed, and reload unexposed photographic film directly into the emptied unit body. They change some consumable parts such as the battery with new ones, before shipping the reloaded film units for sale.

It is illegal for the third party to reload the used film units with an attempt to sell them. Also these reloaded film units do not always work with reliability because they have not been subjected to appropriate inspection and repair before being brought into the market. In addition, since the third parties apply individual modifications to the reloaded articles, if the reloaded articles are collected by the legal manufacturer of the lens-fitted photo film units, it is hard to adapt these articles to the above mentioned reuse or recycling processes. Therefore, many devices for preventing the manufacturing of such reloaded film unit have been suggested.

Japanese Laid-open Patent Applications Nos. 2001-13638 and 2001-83585 suggest incorporating a security IC into a lens-fitted photo film unit. The IC prohibits activating a flash device after the completion of all available exposures until it receives a special electric signal defined by the manufacturer of that film unit. Japanese Patent No. 3283990, specifically in the sixth and seventh embodiments shown Fig.16 to Fig.21 of this patent, discloses a suggestion that a film unit manufacturer produces a film cartridge of a special size designed for use in a predetermined type lens-fitted photo film unit, in order to prevent others from reloading with a commercial film cartridge.

As another method for preventing illegal reloading of the lens-fitted photo film units, it is possible using a specific battery of a different size from the conventional AA-size or AAA-size, i.e., the size according to the International Standards. Making the specific battery smaller than the AAA-size battery will contribute not only to improving interior space efficiency of the lens-fitted photo film unit, and thus minimizing the unit body size, but also preventing illegal reuse of the unit body. Since the unit body is designed to contain the smaller specific battery only, it is hard to set the AA-size or AAA-size battery in that unit body. Furthermore, using smaller batteries is advantageous in terms of reduction of the environmental burdens.

However, such a specific battery must work adequately as a power source for the lens-fitted photo film unit, but must not be expensive or difficult to manufacture. Moreover, part-assembling or part-processing of the lens-fitted photo film unit must not be complicated by using the specific battery. That is, the specific battery must not result in increasing the manufacturing cost or decreasing the production efficiency of the lens-fitted photo film unit.

### SUMMARY OF THE INVENTION

In view of the foregoing, a primary object of the present invention is to provide a lens-fitted photo film unit that prevents the reuse of the film unit body by a third party other than the legal manufacturer.

Another object of the present invention is to provide a battery that is different in size from conventional standardized batteries, but can work adequately as a power source for the lens-fitted photo film unit, and can also be produced at a low cost without complicating the manufacturing processes.

To achieve the above and other objects in a lens-fitted photo film unit having simple photographic devices and an internal dark room that includes an image tunnel, a film roll chamber holding a roll of unexposed photographic film, and a cartridge chamber holding a film cartridge for winding up the photographic film after each exposure, the present invention comprises a specific battery used as a power source, the specific battery having a different size or shape from International Standards; a battery holding room formed in correspondence with the size and shape of the specific battery; and a hollow protrusion formed in the battery holding room adjacently to at least one of end faces of the specific battery, the hollow protrusion having a hollow that joins with the dark room.

According to a preferred embodiment, the specific battery is substantially cylindrical and has a diameter from 9 mm to 15 mm, and an axial length of 40 mm or less.

According to a still preferred embodiment, at least a portion of the hollow is located in a distance from the opposite end face of the specific battery to the hollow protrusion, the distance ranging from L + 1 mm to L + 15 mm, wherein L is an axial length of the specific battery.

In a lens-fitted photo film unit having a flash device, a film roll chamber holding a roll of unexposed photographic film, and a cartridge chamber holding a film cartridge for winding the photographic film after each exposure, the present invention comprises a primary battery used as a power source for the flash device, the primary battery having a different size or shape from International Standards; a load circuit for consuming the battery up to full capacity; a switch for connecting the load circuit to the battery; an interconnection device that acts on the switch to connect the load circuit to the battery in cooperation with a predetermined operation made after the completion of photography; and a locking device for locking the switch in a position connecting the load circuit to the battery.

According to a preferred embodiment, the lens-fitted photo film unit further comprises a charge switch that is switched between an ON position for starting charging the flash device, and an OFF position for terminating charging the flash device, and an operation member externally operable to switch over the charge switch, wherein the load circuit is a flash circuit of the flash device, and the switch is the charge switch, and wherein the locking device disables the operation member from switching over the charge switch after the interconnection device acts on the charge switch to move to the ON position.

The interconnection device preferably cooperates with a lid that is to be opened to remove the film cartridge from the cartridge chamber, such that the interconnection device acts on the charge switch to move to the ON position when the lid is opened.

According to another preferred embodiment, the interconnection device cooperates with an exposure counter mechanism that counts the number of exposures done on the photographic film with reference to the number of rotations of a sprocket that rotates following the photographic film while the photographic film is being wound into the film cartridge. The interconnection device cooperates with the exposure counter mechanism so as to bring the charge switch to the ON position when the photographic film has been wound into the film cartridge by a length corresponding to a predetermined number of exposures.

According to the invention, a battery for use in a lens-fitted photo film unit comprises a plurality of positive electrolytes of a ring shape, at least one of the positive electrolytes being different in size from others of the positive electrolytes; a negative electrolyte placed in the positive electrolytes; a separator placed between the positive electrolytes and the negative electrolyte so as to isolate the positive electrolytes and the negative electrolyte from each other; and a casing for containing and sealing the positive and negative electrolytes and the separator.

According to a preferred embodiment, at least one of the positive electrolytes is formed to be different in axial length or in external diameter from others. The casing of the battery preferably has a substantially cylindrical shape and has an external diameter from 9 mm to 15 mm, and an axial length from 24 mm to 40 mm. The casing of the battery consists of a case shell having an opening in a negative side end face, and a sealing device for sealing the opening of the case shell, wherein the sealing device uses a hydrogen permeable gasket.

The above configurations of the invention make it harder to exchange batteries, because the hollow protrusion will hinder the conventional size battery from being put in the battery holding room. If the hollow protrusion is cut away for the purpose of putting a conventional size battery in the lens-fitted photo film unit, the dark room of the lens-fitted photo film unit cannot maintain light-tightness.

In addition to using such a specific size battery, the lens-fitted photo film unit of the second invention is configured such that the flash device is forced into a charging condition after the completion of photography, in order to consume the contained battery. Therefore the flash device of the used up lens-fitted photo film unit will not work unless the discharged battery is replaced with a new battery of the specific size.

By predetermining the capacity or volume of electrolytic materials appropriately, it is possible to achieve a sufficient battery capacity for the flash photography, without lengthening the time taken for consuming the battery completely. This is also effective to prevent the used film unit from being reloaded with a relatively small AAA-type or N-type battery by use of a special adapter case or the like.

### BRIEF DESCRIPTION OF THE DRAWINGS

The foregoing and other features and advantages of the present invention will be described below in detail with reference to the accompanying drawings, in which like elements are designated by like reference numerals, and wherein;
Figure 1 is a perspective view illustrating an outer appearance of a lens-fitted photo film unit according to a first embodiment of the present invention;
Figure 2 is an exploded perspective view of the lens-fitted photo film unit according to the first embodiment;
Figure 3 is a perspective view illustrating a main body portion and a flash device of the lens-fitted photo film unit according to the first embodiment;
Figure 4 is a schematic sectional view of the lens-fitted photo film unit of the first embodiment;
Figure 5 is a schematic sectional view of a lens-fitted photo film unit according to a second embodiment of the present invention;
Figure 6 is a schematic sectional view illustrating a specific battery that is designed for exclusive use in the lens-fitted photo film unit;
Figure 7 is an exploded perspective view of the battery shown in Fig.6;
Figure 8 is a schematic sectional view illustrating a second embodiment of specific battery for the lens-fitted photo film unit;
Figure 9 is a schematic sectional view illustrating a third embodiment of specific battery for the lens-fitted photo film unit;
Figure 10 is a schematic sectional view illustrating a fourth embodiment of specific battery for the lens-fitted photo film unit;
Figure 11 is a schematic sectional view illustrating a fifth embodiment of specific battery for the lens-fitted photo film unit;
Figure 12 is a schematic sectional view illustrating a sixth embodiment of specific battery for the lens-fitted photo film unit;
Figure 13 is a perspective view illustrating an outer appearance of a lens-fitted photo film unit according to another embodiment of the present invention;
Figure 14 is an exploded perspective view illustrating the lens-fitted photo film unit according to the embodiment shown in Fig.13;
Figure 15 is a perspective view illustrating a mechanism for starting supplying power to a flash device in cooperation with a cartridge chamber bottom lid being opened, according to the embodiment shown in Fig.13;
Figure 16 is a fragmentary plan view illustrating a relationship between the mechanism of Fig. 15 and a charge switch of the flash device;
Figure 17 is an enlarged sectional view illustrating a lock mechanism for the mechanism of Fig.15;
Figure 18 is a perspective view illustrating a mechanism for starting supplying power to a flash device after a lens-fitted photo film unit is used up, according to a further embodiment of the present invention; and
Figure 19 is a schematic sectional view illustrating a conventional standardized battery.

### DESCRIPTION OF THE PREFFERED EMBODIMENTS

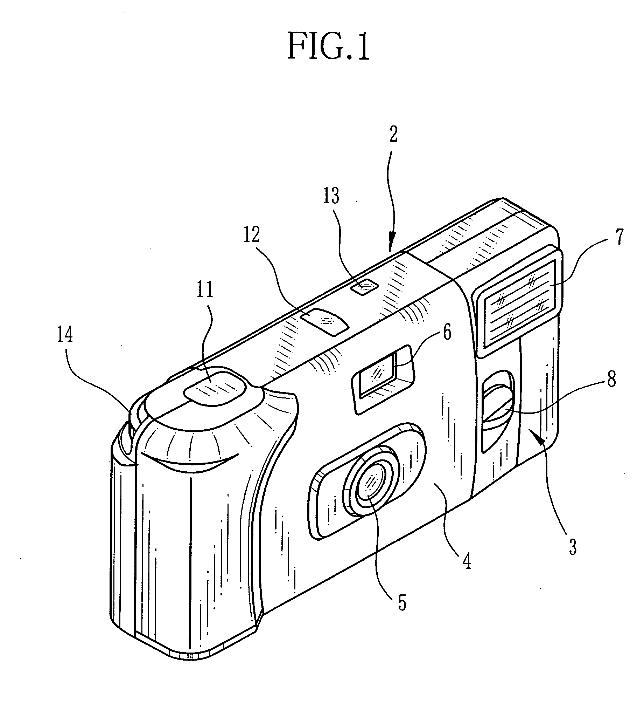

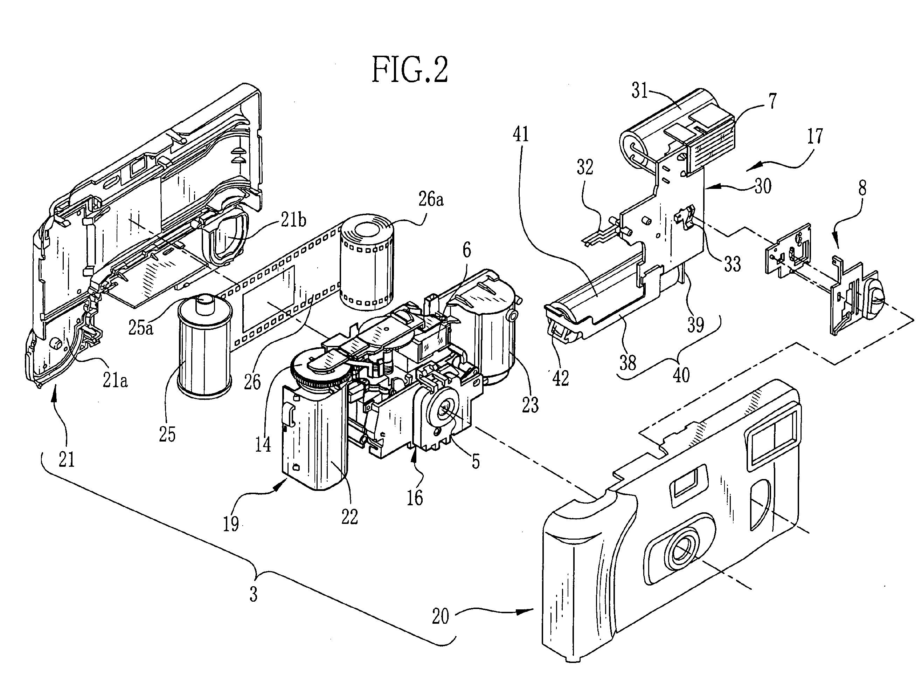

In the first embodiment shown in Fig.1 and 2, a lens-fitted photo film unit 2 is constituted of a film unit body 3 having photographic mechanism incorporated therein, and an ornamental label 4 that is partly wrapped around the film unit body 3.

The film unit body 3 has at its front side a photographic lens 5, a viewfinder objective window 6, a flash light emitting portion 7, and a flash charge button 8. The film unit body 3 has at its top side with a shutter release button 11, an exposure counter window 12 and a flash-ready indicator window 13 made of a light guide. On the rear side of the film unit body 3 are disposed a film winding wheel 14 and a not-shown viewfinder ocular window.

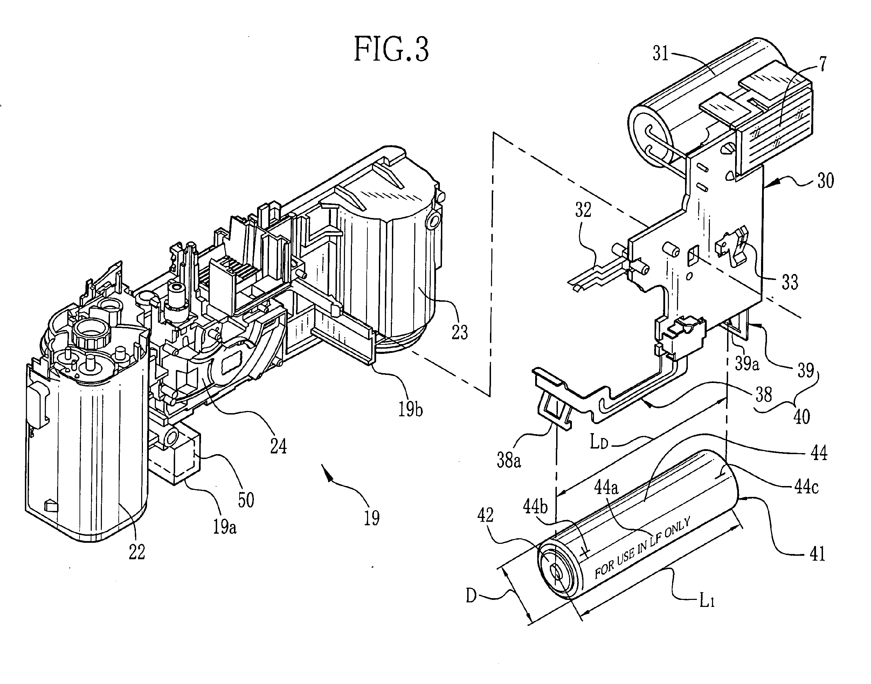

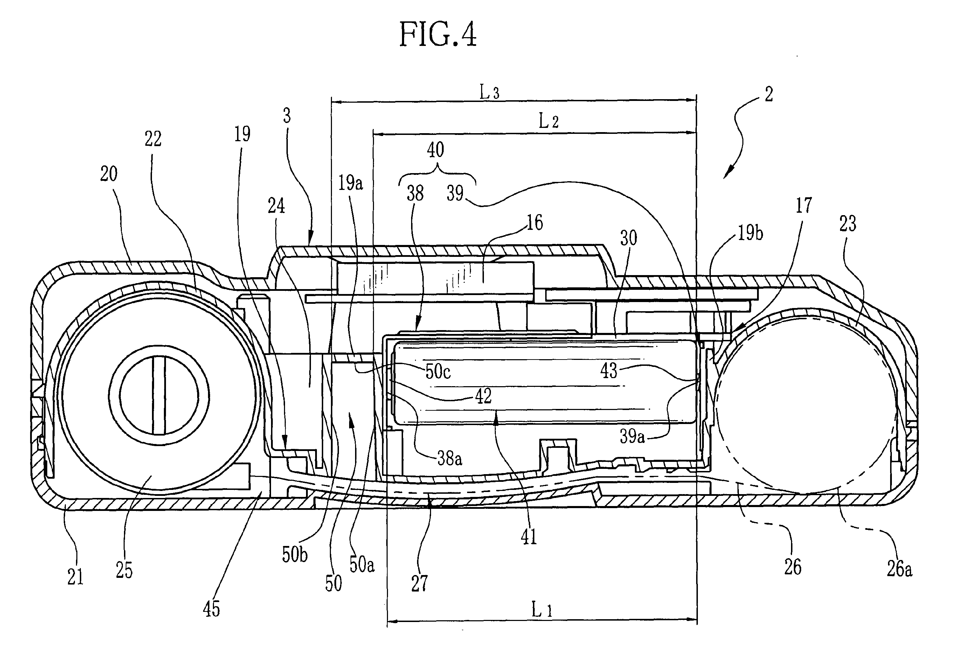

As shown in Fig.2, the film unit body 3 is constituted of a main body portion 19 having an exposure device 16, a flash device 17 and other mechanisms mounted thereto, and front and rear cover portions 20 and 21 attached to the main body portion 19 to cover the front and rear sides thereof. The front cover portion 20 is formed with openings for exposing the photographic lens 5, the viewfinder objective window 6, the flash light emitting portion 7, the flash charge button 8 and other necessary parts. As shown in Fig.3, the main body portion 19 has a cartridge chamber 22, a film roll chamber 23 and an image tunnel 24 that is disposed between the chambers 22 and 23. The exposure device 16 is removably mounted to the front of the image tunnel 24. The flash device 17 is mounted between the exposure device 16 and the film roll chamber 23 through hooks. The cartridge chamber 22 and the film roll chamber 23 respectively hold a film cartridge 25 and a roll 26a of unexposed photographic film 26 that is previously pulled out from the film cartridge 25 and rolled. The film winding wheel 14 is disposed pivotally on top of the cartridge chamber 22 such that a bottom shaft of the wheel 14 is engaged in a spool 25a of the film cartridge 25 as held in the cartridge chamber 22. By turning the film winding wheel 14 in a counterclockwise direction in the drawing, the photographic film 26 is wound into the photo film cartridge 25. As the rear cover portion 21 is attached to cover the rear side of the main body portion 19, a film passageway 27 is formed between the rear cover portion 21 and the main body portion 19, as shown in Fig.4. The film passageway 27 extends from the film roll chamber 23 through behind the image tunnel 24 to the cartridge chamber 22. Through this film passageway 27, the photographic film 26 is fed from the film roll chamber 23 to the film cartridge 25 held in the cartridge chamber 22. Bottom lids 21a and 21b are formed integrally with the rear cover portion 21, so as to close the bottom sides of the cartridge chamber 22 and the film roll chamber 23 light-tightly.

The flash device 17 is a unit, as shown in detail in Fig. 3, wherein the flash emitting portion 7, a main capacitor 31, a synch-switch 32 and other elements constituting a flash circuit are mounted on a circuit board 30. When the flash charge button 8 is slid upward, a metal contact 33 of a charge switch is actuated to turn the charge switch ON, the main capacitor 31 starts to charge. The flash device 17 is designed to emit a flash of light when the synch-switch 32 is turned on by a not-shown shutter blade that swings upon the shutter release button 11 being pressed down.

A battery holder 40 consisting of a positive contact strip 38 and a negative contact strip 39 is mounted to a bottom side of the circuit board 30, for holding a battery 41 that serves as a power source for the flash circuit. The positive contact strip 38 and the negative contact strip 39 are each formed by bending a metal plate, and keep in contact with a positive electrode 42 and a negative electrode 43 of the battery 41 respectively by virtue of their resiliency, so that the battery 41 is held between them.

As will be described in detail later, the battery 41 is a specific battery that is designed for exclusive use in the lens-fitted photo film unit 2 of the present embodiment. The battery 41 has a different size from the conventional standardized sizes such as the AA-size and the AAA-size. According to the present embodiment, the specific battery 41 is substantially cylindrical, and preferably has a diameter D from 9 mm to 15 mm, and an axial length L1 of 40 mm or less. More preferably, the diameter D is from 9 mm to 11 mm, and the axial length L1 is 38 mm or less. It is to be noted that the conventional AAA-size battery is 10.5 mm in diameter, and 44.5 mm in axial length.

A label 44 is put around the periphery of the battery 41, showing a trade name, ornamentations, and the like. The label 44 also has a warning 44a that the battery 41 is for use in the lens-fitted photo film unit 2 only. In addition, the label 44 has a plus sign 44b and a minus sign 44c, showing a positive electrode side and a negative electrode side respectively.

As shown in Fig.3, the size of the positive contact strip 38 and the negative contact strip 39 of the battery holder 40 are determined in accordance with the size of the battery 41. That is, a distance LD from a contact point 38a of the positive contact strip 38 with the positive electrode 42 to a contact point 39a of the negative contact strip 39 with the negative electrode 43 is determined by the axial length L1 of the battery 41.

Internal structure of the lens-fitted photo film unit 2 around the battery holder 40 is shown in detail in Fig.4. Specifically, the battery holder 40 holding the battery 41 is securely attached together with the flash device 17 to the main body portion 19, and is covered with the front and rear cover portions 20 and 21. Then the battery 41 is placed below the image tunnel 24.

As described above, the main body portion 19 is formed integrally with the cartridge chamber 22, the film roll chamber 23 and the image tunnel 24. As the rear and bottom sides of the main body portion 19 are closed light-tightly with the rear cover portion 21, a dark or black room 45 is formed between the main body portion 19 and the rear cover portion 21. The main body portion 19 is further formed integrally with a couple of protrusions 19a and 19b. The protrusions 19a and 19b protrude forward from the main body portion 19 into a battery holding room that is provided below the image tunnel 24. While the flash unit 17 with the battery holder 40 is attached to the main body portion 19, the protrusions 19a and 19b adjoin the positive and negative contact strips 38 and 39 respectively.

One of the protrusions 19a and 19b that is placed on the side of the positive electrode 42, i.e. the protrusion 19a, is formed as a hollow protrusion. An internal hollow 50 of the hollow protrusion 19a joins with the film passageway 27. That is, the hollow 50 leads to the dark room 45. The hollow 50 is substantially rectangular in horizontal section, and is bounded by walls 50a, 50b and 50c. To facilitate the following explanation, among these walls 50a to 50c, one placed on the side of the positive electrode 42 is designated by 50a, and one placed on the side of the cartridge chamber 22 in opposition to the wall 50a is designated by 50b, whereas other wall portions connecting these walls 50a and 50b are designated by 50c. The size of the hollow 50 is determined in accordance with the size of the battery 41, such that L2 = L1 + 1mm, and L3 = L1 + 15mm, wherein L1 is an axial length of the battery 41, L2 a distance from an end face of the negative electrode 43 to the wall 50a, and L3 a distance from an end face of the negative electrode 43 to the wall 50b.

According to the above embodiment, even if a third party other than the legal manufacturer of the lens-fitted photo film unit 2 collects the used film unit for the purpose of illegal reloading, it is impossible to put a conventional battery of the standardized size in the battery holder 40 in place of the specific battery 41. This is because the distance LD between the contact points 38a and 39a of the contact strips 38 and 39 is determined by the axial length L1 of the specific battery 41 that is different from the conventional size batteries, and also the distance LD is confined by the protrusions 19a and 19b of the main body portion 19.

It is possible to cut the hollow protrusion 19a so as not to prevent the use of a conventional size battery. However since the hollow 50 of the hollow protrusion 19a leads to the dark room 45, if the hollow protrusion 19a is broken or cut away, the dark room 45 will not be shielded from extraneous light, so the lens-fitted photo film unit 2 is not able to contain the photographic film in a light-tight fashion.

Although it may be possible to close an opening that is formed by cutting the hollow protrusion 19a, it cannot be easy to close such an opening in a light-tight fashion. For example, if that opening is closed with an adhesive tape or the like, extraneous light may leak into the dark room 45. Therefore, the lens-fitted photo film unit 2 using the specific battery 41 is difficult to reuse just by reloading a photographic film in the film unit body 3.

In the above embodiment, only the protrusion 19a on the side of the positive electrode 42 has the hollow 50 that is connected to the dark room 45. Alternatively, the protrusion 19b on the side of the negative electrode 43 may have a hollow connected to the dark room 45 instead of the protrusion 19a, or both protrusions may be formed as hollow protrusions.

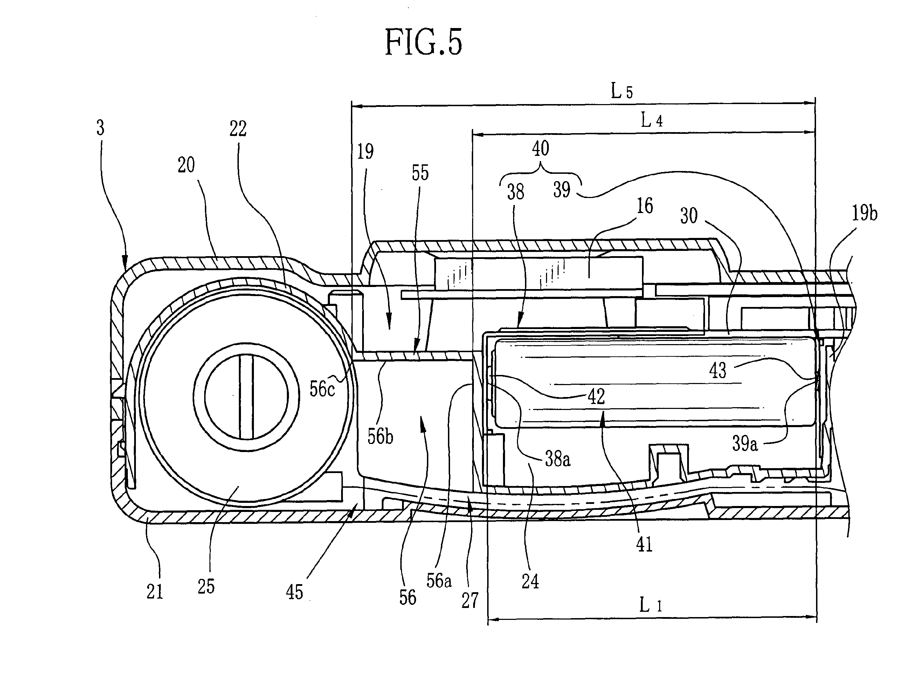

The shape and the position of the hollow protrusion 19a are not limited by the present invention. For example, it is possible to provide a hollow protrusion in a way as shown in Fig.5. It is to be noted that the same or like elements will be designated by the same reference numerals as in the above embodiment, so the following description will refer only to those elements which are essential to the following embodiments.

The hollow protrusion 55 shown in Fig.5 is disposed below the image tunnel 24, like the protrusion 19a of the above embodiment. A hollow 56 of the hollow protrusion 55 joins with a film passageway 27 and a cartridge chamber 22, and is confined by an internal wall surface 56a extending substantially vertical to the film passageway 27, and an internal wall surface 56b extending from the cartridge chamber 22 to the internal wall surface 56. So the hollow protrusion 55 has an L-shaped horizontal section.

The size of the hollow protrusion 55 is determined such that L4 = L1 + 1mm, and L5 = L1 + 15mm, wherein L1 is the axial length of the battery 41, L4 a distance from the end face of the negative electrode 43 to the internal wall surface 56a, L5 a distance from an end face of the negative electrode 43 to a connecting point 56c between the internal wall surface 56b and the cartridge chamber 22.

The hollow protrusion 55 prevents insertion of the conventional size battery in the same way as the hollow protrusion 19a. Furthermore, if the hollow protrusion 55 is cut away, not only the film passageway 27 but also the cartridge chamber 22 cannot keep their light-tightness, so the lens-fitted photo film unit will not work appropriately. In this way, the embodiment shown in Fig. 5 certainly prevents the illegal reuse.

Although the battery 41 used in the above embodiments is substantially cylindrical, the specific battery for the lens-fitted photo film unit may have another shape, as described in detail later. Regardless of the shape of the specific battery, if there is at least a hollow protrusion that confines the size of the battery holder in the lens-fitted photo film unit, the above mentioned preventive effect against the illegal reuse of the film unit body will be achieved.

In the above embodiments, the hollow of the protrusion joins with the film passageway. But the hollow protrusion may be disposed in another position so far as the hollow joins with the dark room 45 inside the film unit body 3.

The position of the battery holding room is not necessarily located below the image tunnel 24, but may be another place so far as the size of the battery holder is confined by at least a hollow protrusion.

That is, so far as at least a hollow protrusion confines the size of the battery holder and the hollow of the hollow protrusion is connected to the dark room 45, the same preventive effect against the illegal reuse of the lens-fitted photo film unit as described above is achievable.

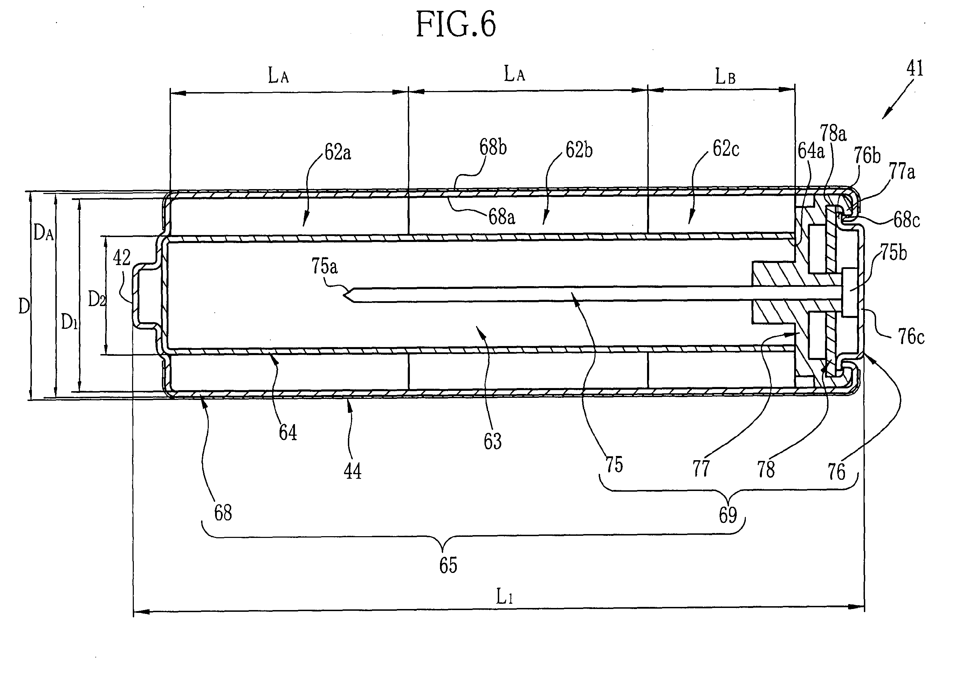

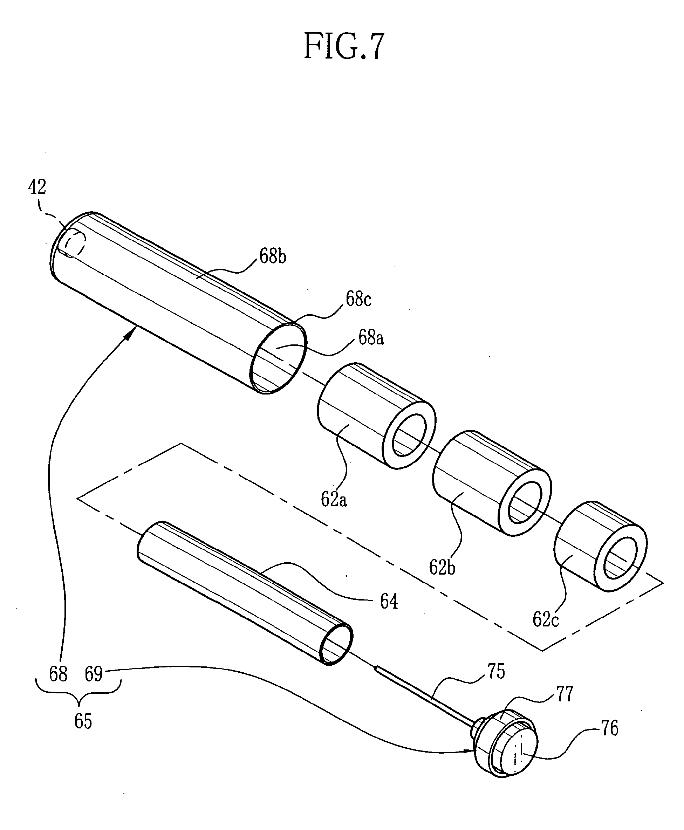

Fig. 6 and Fig. 7 show the detail of the specific battery 41 used in the lens-fitted photo film unit 2 according to the first embodiment of the present invention. In this embodiment, the battery 41 is an alkaline battery that consists of first to third positive electrolytes 62a, 62b and 62c, a negative electrolyte 63, a separator 64, and a casing 65 containing these components therein.

The positive electrolytes 62a to 62c are each formed as a solid ring made by mixing and kneading MnO₂, an active material of the positive electrode, with kalium hydroxide solution as an electrolytic solution and other minor materials. The first to the third positive electrolytes 62a to 62c are arranged in series and coaxial to each other inside the casing 65. As the minor materials of the positive electrolytes 62a to 62c, conductivity co-adjuvant, such as graphite, acetylene black or Ketchen black (a trade name), may be added. Among these positive electrolytes 62a to 62c, the first positive electrolyte 62a and the second positive electrolyte 62b are equal in size to each other. That is, they have an equal external diameter D1, an equal internal diameter D2 and an equal axial length LA. The third positive electrolyte 62c has the same external diameter D1 and the internal diameter D2 as the first and the second positive electrolytes 62a and 62b, but has a shorter axial length LB than the axial length LA of the first and the second positive electrolytes 62a and 62b.

The casing 65 consists of a case shell 68 and a sealing device 69.

The case shell 68 is made of a steal blade, and is formed into a substantially cylindrical shape by stamping. The case shell 68 has a closed end face on the positive side, and an open end on the negative side. The sealing device 69 seals the open end on the negative side of the case shell 68. The positive electrode 42 is formed integrally on the positive side end face of the case shell 68. In this embodiment, the positive electrode 42 is a round protrusion of a smaller diameter that protrudes axially outward.

The case shell 68 has an internal diameter that is defined by the external diameter D1 of the positive electrolytes 62a to 62c, and an internal periphery 68a of the case shell 68 is coated with a conductive layer.

The conductive layer is formed by applying a conductive material, such as graphite powder. As the positive electrolytes 62a to 62c are inserted into the case shell 68, the external peripheries of the positive electrolytes 62a to 62c fit on the conductive layer of the internal periphery 68a of the case shell 68, so the positive electrolytes 62a to 62c are electrically connected to the case shell 68.

In this embodiment, the casing 65 is equal in size to the conventional AA-size battery, except for the shorter axial length L1. That is, the casing 65 has an external diameter DA from 9 mm to 15 mm, and the axial length L1 is from 24 mm to 38 mm. The label 44 is put around an outer periphery 68b of the case shell 68. Instead of printing the warning 44a, the plus and the minus signs 44b and 44c on the label 44, it is possible to provide such information directly on the outer periphery 68b of the case shell 68 by painting or printing.

The separator 64 is made from a material that is resistant to alkaline electrolytic solution. For example, the separator 64 is formed by pressing a non woven fabric of a resin material, to have a substantially cylindrical shape with one end 64a open and the other end closed. The size of the separator 64 is defined by the internal diameter D2 of the positive electrolytes 62a to 62c. As the resin material of the non woven fabric for the separator 64, winy lone or rayon is usable. But synthetic fibers including polyamide, chloroethene-acrylonitrile copolymer and polyolefin, or natural fibers, or glass fibers are usable as the material for the separator 64. The separator 64 is fitted in the centers of the positive electrolytes 62a to 62c. The inside of the separator 64 is filled with the negative electrolyte 63.

As an example, the negative electrolyte 63 is a mixture of zinc powder as a negative electrode active material, kalium hydroxide solution as an electrolytic solution, a thickener and other minor materials. The thickener is used for diffusing the negative electrode active material equally in the electrolytic solution, and thus keeping the negative electrolyte 63 gelatinous. The gelatinous negative electrolyte 63 is poured through the open end 64a of the separator 64 into the separator 64. Because the separator 64 is made of an alkaline resistant material, the separator 64 electrically insulates and also physically separates the positive electrolytes 62a to 62c and the negative electrolyte 63 from each other.

The sealing device 69 consists of a negative collector 75, a sealing disc 76 that doubles as a negative electrode 43, a gasket 77 and a cap 78. The negative collector 75 is formed to be a bar from a metal such as brass. One end 75a of the negative collector 75 is inserted in the gelatinous negative electrolyte 63, while a second end 75b protrudes out of the negative electrolyte 63. The gasket 77 is securely attached to the second end 75b of the negative collector 75 that protrudes from the negative electrolyte 63. The gasket 77 is made from a resin, e. g. polyamide resin, and formed into a shape of duplex round disc. The cap 78 made of a metal is fitted on the negative electrode side of the gasket 77. The cap 78 is shaped into a ring, and is force-fitted on the second end 75b of the negative collector 75, while an external periphery 78a of the cap 78 fits an internal periphery of the gasket 77. The sealing disc 76 is pressed onto the cap 78. The sealing disc 76 is formed by stamping a metal sheet into a shape having a round center portion 76a and an annular brim 76b.

To fit the sealing device 69 in the case shell 68, the negative collector 75 having the gasket 77 and the cap 78 fitted thereon is stuck into the negative electrolyte 63. Thereafter, while pressing the brim 76b and the center portion 76a of the sealing disc 76 respectively onto the cap 78 and the second end 75b of the negative collector 75, a rim 68c of the case shell 68 and a rim 77a of the gasket 77 are bent together inwards, so as to hold the brim 76b of the sealing disc 76. This way the sealing device 69 seals the open end 68a of the case shell 68.

The gasket 77 of the sealing device 69 is preferably made from a well-known hydrogen permeable filter, e.g. porous polyurethane foam. Forming the gasket 77 from a hydrogen permeable material allows letting hydrogen gas out through the gasket 77, the gas being generated from the negative electrolyte 63. Therefore, it is unnecessary to provide an accumulation room for the hydrogen gas that has been provided in the conventional alkaline battery. So it is possible to fill the casing 65 with the negative electrolyte 63 and the positive electrolytes 62a to 62c almost up to the full capacity. Therefore, in spite of the smaller capacity of the casing 65, which is for reducing the whole size of the battery 41, the battery 41 keeps comparable performances to the conventional larger size battery, for supplying sufficient power to the lens-fitted photo film unit.

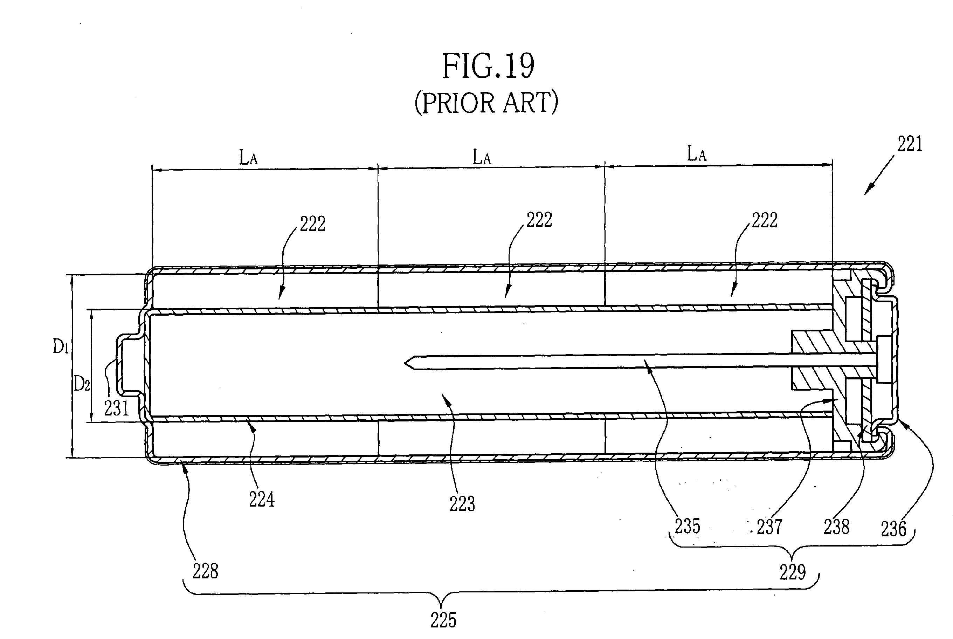

The battery 41 having the above described structure can be produced at a low cost without complicating the manufacturing process. The reasons will be described in detail in comparison with a conventional size alkaline battery 221 shown in Fig.19. For the sake of comparison, the conventional alkaline battery 221 is assumed to be the AA-size.

The conventional alkaline battery 221 is composed of three positive electrolytes 222, a negative electrolyte 223, a separator 224, and a casing 225. The positive electrolytes 222 are equal to each other, and also equal in shape and size to the first and the second positive electrolytes 62a and 62b of the specific battery 41. That is, they have the same external diameter D1, the same internal diameter D2 and the same axial length LA. The three positive electrolytes 222 are arranged in series and coaxial to each other inside the casing 225. The casing 225 consists of a case shell 228 and a sealing device 229. The case shell 228 has a positive electrode 231 formed integrally on its one end. The sealing device 229 consists of a negative collector 235, a sealing disc 236 that doubles as a negative electrode, a gasket 237 and a cap 238. Also in the conventional battery 221, the sealing device 229 is attached to the negative side of the case shell 228, in the same as described with respect to the battery 41.

As seen from the comparison of the battery 41 of the present invention with the conventional alkaline battery 221, the positive electrolytes 222 of the conventional battery 221 are usable as the first and the second positive electrolytes 62a and 62b of the battery 41. Because the third positive electrolyte 62c is different merely in axial length from the positive electrolyte 222, so that the first to the third the positive electrolytes 62a to 62c can be easy to manufacture by use of a production line for the conventional positive electrolyte 222. Also because the separator 64 and the case shell 68 need only to change the axial length from the conventional ones, it is possible to manufacture the separator 64 and the case shell 68 just by applying partial modifications to metal molds used for stamping in the production lines of the separator 224 and the case shell 228. As for the sealing device 69, all of the components can be conventional ones.

Accordingly, the battery 41 of the present invention can be manufactured by use of many parts of the conventional alkaline battery 221, without making a great change in the production line for the conventional batteries. So the battery 41 of different size from the conventional alkaline battery 221 can be manufactured easily at a low cost. Moreover, it is easy to define the power supplied from the battery 41 on the basis of the difference in size between the conventional positive electrolyte and the positive electrolyte of the battery 41. Therefore, the battery 41 can achieve sufficient performance as a power source for the lens-fitted photo film unit.

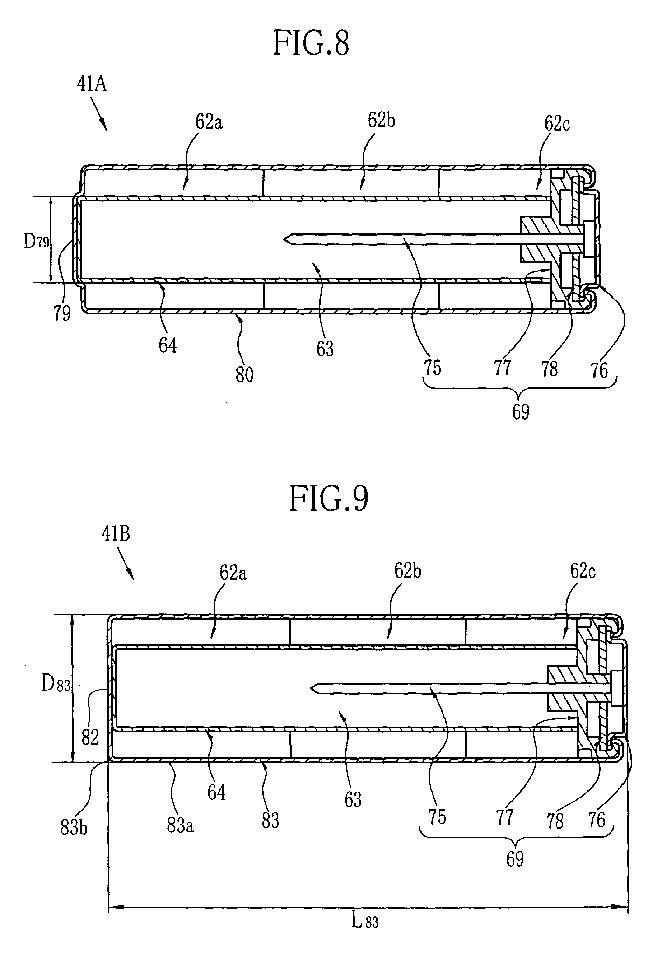

The structure of the specific battery for the lens-fitted photo film unit of the present invention is not to be limited to the above embodiment. For example, the specific battery may have a positive electrode of a different shape from conventional, as shown in Fig.8 to Fig.11, though the positive electrode 42 of the battery 41 of the above embodiment has the same shape as the conventional standardized battery. In Fig.8 to Fig.11, the same or like elements are designated by the same reference numerals as the above embodiment, so the description of these elements will be omitted for brevity sake.

Fig.8 shows a battery 41A whose positive electrode 79 is formed as a convexity that protrudes axially outward from a casing 80 and has a larger diameter D79 than the positive electrode of the conventional battery.

Fig.9 shows a battery 41B whose positive electrode 82 is flat and even to a face end 83b of a casing 83. That is, the positive electrode 82 forms a plane that is perpendicular to an axial direction of the cylindrical casing 83 and borders to an external periphery 103a of the casing 83. As having the flat positive electrode 82, the battery 41B shown in Fig.9 has a shorter axial length of the casing 83 than the above embodiments. The casing 83 preferably has a diameter D83 from 9 mm to 11 mm and an axial length L83 from 22 mm to 38 mm.

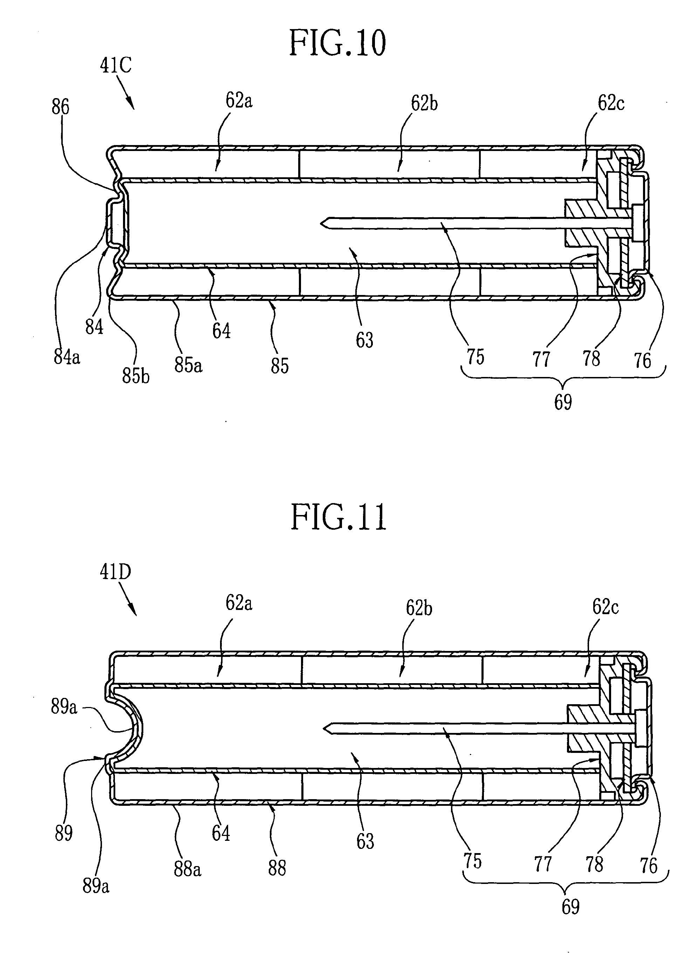

Fig.10 shows a battery 41C whose positive electrode 84 protrudes axially outward from a casing 85, and has a round end face 84a. However, the end face 84a does not protrude from a positive side rim 85b of an external periphery 85a of the casing 85. That is, a recess 86 is formed in the casing 85 around the positive electrode 84.

Fig.11 shows a battery 41D whose positive electrode 89 has a hemisphere concavity 89a in the center and a circular convex surface 89b around the concavity 89a, wherein the circular surface 89b extends in a plane perpendicular to an external periphery 88 of a casing 88 of the battery 41D.

With the change in shape of the positive electrode of the specific battery from that of the conventional battery, in the way as shown in Fig. 8 to Fig .11, the shape of positive contact strip of the battery holder of the lens-fitted photo film unit is changed correspondingly. Therefore, it becomes harder to replace the battery 41A, 41B, 41C or 41D with the conventional battery, so the embodiments shown in Figs. 8 to 11 ensure the preventive effect against the illegal reuse or reloading of the lens-fitted photo film unit.

Among the above embodiments, the battery 41C has the recessed portion 86 around the periphery of the positive electrode 84, and the battery 41D has the concavity 89a in the center of the positive electrode 89. Then, the positive contact strip for the battery 41C or 41D is to be provided with a complementary convex portion, which will make the illegal reuse harder.

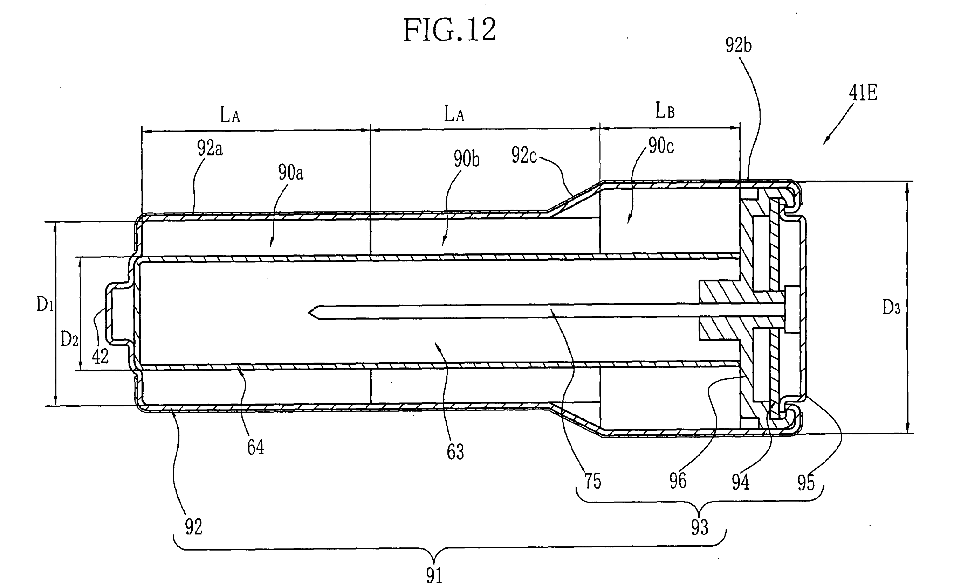

In the specific battery according to the above embodiments, one of the three positive electrolytes is different only in axial length from others. But the present invention is not to be limited to this configuration, but the specific battery may be configured as shown in Fig. 12. In Fig.12, the same or like elements are designated by the same reference numerals as the above embodiments, so the description of these elements will be omitted for brevity sake.

The battery 41E is composed of a first to third positive electrolytes 90a, 90b and 90c, the negative electrolyte 63, a separator 64 and a casing 91 containing these components tightly. Among these positive electrolytes 90a to 90c, the first positive electrolyte 90a and the second positive electrolyte 90b are equal in size to each other. That is, they have an equal external diameter D1, an equal internal diameter D2 and an equal axial length LA. The third positive electrolyte 90c has the same internal diameter D2 as the first and the second positive electrolytes 90a and 90b have, but has a shorter axial length Lb than the axial length LA of the first and the second positive electrolytes 90a and 90b, and also a larger external diameter D3 than the external diameter D1 of the first and the second positive electrolytes 90a and 90b.

The first to the third positive electrolytes 90a to 90c are arranged in series and coaxial to each other inside the casing 91, wherein the third positive electrolyte 90c is the closest to the negative side. The casing 91 consists of a case shell 92 and a sealing device 93. The case shell 92 has a positive electrode 42 formed integrally on its one end. The sealing device 96 consists of a negative collector 75, a sealing disc 95 that doubles as a negative electrode, a gasket 96 and a cap 94. Also in the battery 41E, the sealing device 93 is attached to the negative side of the case shell 92, in the same as described with respect to the battery 41.

The case shell 92 is formed by stamping or the like, to have a positive side cylinder portion 92a and a negative side cylinder portion 92b with a larger diameter than the positive side cylinder portion 92a. The difference in diameter between the positive side cylinder portion 92a and the negative side cylinder portion 92b is determined in correspondence with the difference between the external diameter D1 of the first and the second positive electrolytes 90a and 90b and the external diameter D3 of the third positive electrolyte 90c. The positive side cylinder portion 92a is connected to the negative side cylinder portion 92b through a conic portion 92c. The diameter of the conic portion 92c gradually increases from a value equal to the diameter of the positive side cylinder portion 92a to a value equal to the diameter of the negative side cylinder portion 92b. Thanks to the conic portion 92c, the positive electrolytes 90a and 90b are smoothly put into the positive side of the case shell 92. In addition, the conic portion 92c makes it easier to form the case shell by stamping. Therefore, the embodiment shown in Fig.12 is also easy to manufacture.

Although the positive electrolytes used in the above embodiments are of a ring shape having round or circular external and internal peripheries, the present invention is not limited to this configuration. For example, one of the internal periphery and the external periphery of the positive electrolyte may be rectangular or polygonal, while the other may be circular. It is also possible to make both the internal and the external peripheries of the positive electrolyte polygonal.

Although the above described embodiments change the size of one of a plurality of positive electrolytes of the specific battery, it is possible to change the size of two or more of the positive electrolytes to produce the specific battery for the lens-fitted photo graphic film.

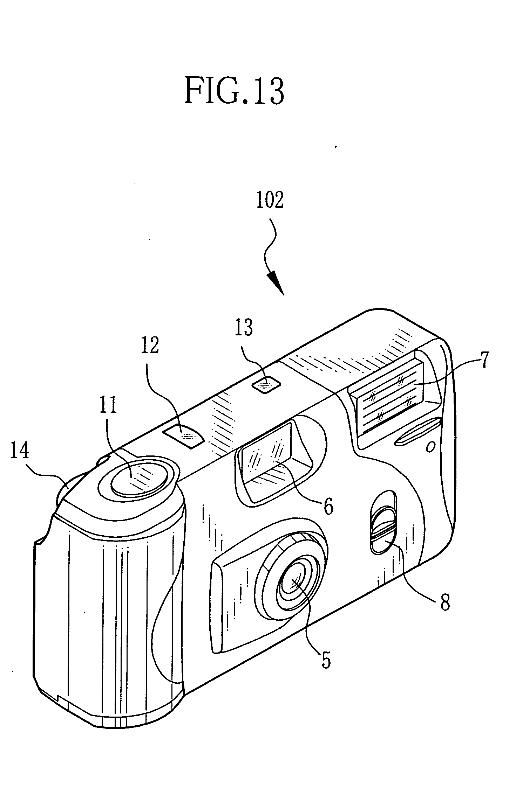

Now a lens-fitted photo film unit 102 according to a further embodiment of the present invention will be described with reference to Fig. 13 to Fig.17. The lens-fitted photo film unit 102 can contain a primary battery of a specific size, like the above described embodiments, and is also configured to use up the contained battery after the completion of all available exposures.

According to this configuration, after the lens-fitted photo film unit 102 is used up, a flash device will not work unless the dead battery is changed with a new battery of the specific size. Therefore, this embodiment is more effective to prevent the illegal film reloading by the third party.

In Fig. 13 to Fig. 17, the same or like elements are designated by the same reference numerals as the above embodiments, so the detail of these elements will be omitted in the following description.

The lens-fitted photo film unit 102 has on its front side a photographic lens 5, a viewfinder objective window 6, a flash charge button 8, and a flash emitting portion 7. The lens-fitted photo film unit 102 has on its top side a shutter release button 7, an exposure counter window 12 and a flash-ready indicator window 13.

The photographic lens 5 is composed of two convex lenses made of an optical resin. In the viewfinder objective window 6 is disposed a concave lens, which constitutes an inverted Galilean viewfinder in combination with a not-shown convex eyepiece lens.

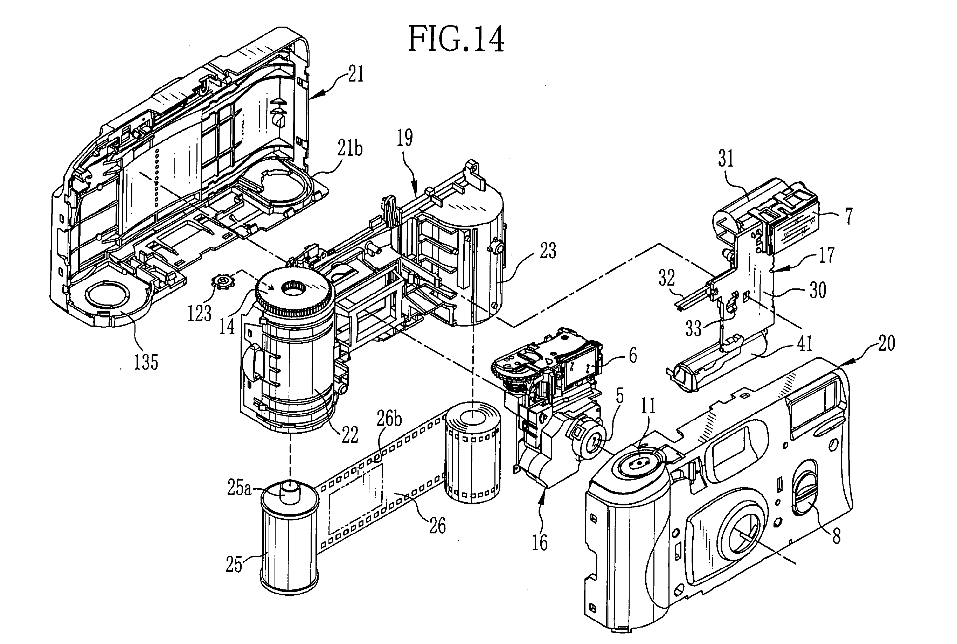

As shown in Fig. 14, the lens-fitted photo film unit 102 is constituted of an exposure device 16 having photographic mechanisms incorporated therein, the flash device 17, a main body portion 19 containing a film cartridge 25 and a roll of photographic film 26, a front cover portion 20 and a rear cover portion 21. A sprocket 123, a member of the photographic mechanisms, is positioned to protrude partly from a rear side of the main body portion 19, so that the sprocket 123 engages with perforations 26b of the photographic film 26. While the photographic film 26 is being wound into the film cartridge 25 by turning a film winding wheel 14, the sprocket 123 is rotated by the perforations 26b.

The rotation of the sprocket 123 is transmitted to a shutter charging mechanism, a winding-lock mechanism and a counter mechanism, which constitute the photographic mechanisms.

Thereby, the shutter charging mechanism is cocked or set ready for a shutter release operation. In the shutter release operation, a shutter blade that is not-shown but disposed behind the photographic lens 5 is kicked for making an exposure.

The winding-lock mechanism locks the film winding wheel 14, when the photographic film 26 is wound up by a length corresponding to one picture frame, by pressing an anti-winding claw onto one of knurls that are formed on a peripheral surface of the film winding wheel 14.

The counter mechanism causes the counter dial to rotate by one scale at each exposure so as to count down the remaining number of available exposures that is seen through the exposure counter window 12.

The flash charge button 8 is operated to slide up and down. As the flash charge button 8 is slid up, the flash device 17 starts charging. As the flash charge button 8 is slid down, the flash charging is terminated. The flash-ready indicator window 13 begins to light intermittently while the flash device is being charged in response to the up-sliding operation on the flash charge button 8, and begins to light continuously when the flash device is charged fully.

The specific battery 41 for use in the lens-fitted photo film unit 102 is a cylindrical alkaline manganese cell, which is substantially equal in diameter to the conventional AAA-size dry battery, but shorter in axial length than the conventional AAA-size. As mentioned above, the conventional AAA-size is 44.5 mm in axial length and 10.5 mm in diameter. Concretely, according to this embodiment, the specific battery 41 has an axial length from 24 mm to 38 mm, and a diameter from 9.5 mm to 10.5 mm.

The battery 41 is held in a battery holding room that is formed under the exposure device 16. Because the size of the battery holding room is determined in correspondence with the size of the battery 41, a battery of a larger axial length or a larger diameter than the battery 41 cannot fit in this battery holding room. For example, since the conventional N-size battery is 30.2 mm in axial length and 12.0 mm in diameter, the lens-fitted photo film unit 102 cannot use the N-size battery because of its larger diameter.

The rear cover portion 21 is formed integrally with a film roll chamber bottom lid 21b and a cartridge chamber bottom lid 135, which close bottom sides of a film roll chamber 23 and a cartridge chamber 22 respectively. The cartridge chamber bottom lid 135 is formed to be opened for removing the film cartridge 25 after the whole length of the photographic film 26 is wound up into the film cartridge 25.

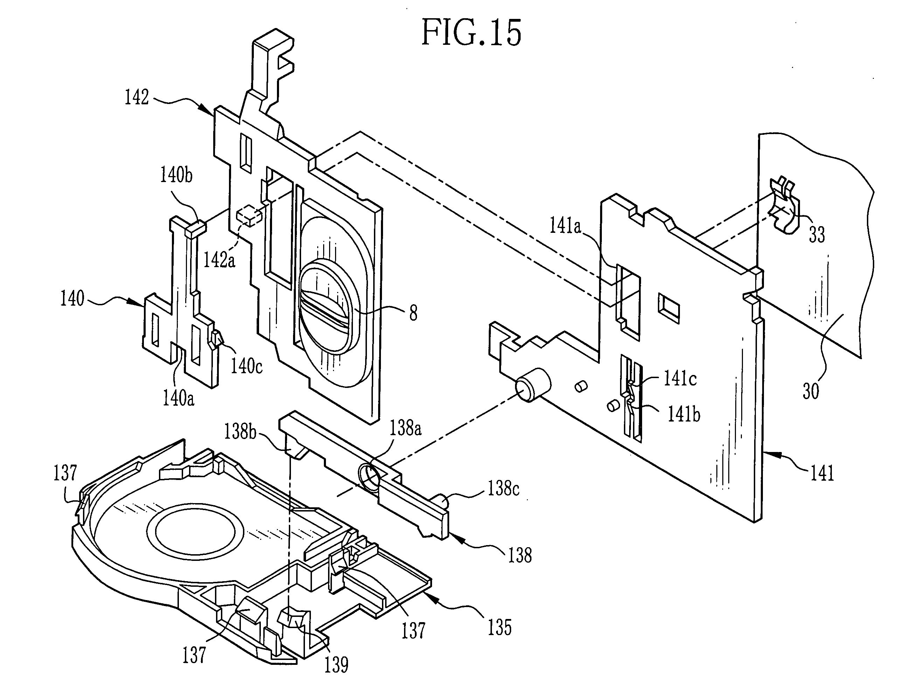

As shown in Fig.15, the cartridge chamber bottom lid 135 is formed with a number of hooks. Among these hooks, those designated by 137 are used for securing the cartridge chamber bottom lid 135 to main body portion 19 at the bottom of the cartridge chamber 22. On the other hand, a hook 139 is engaged with an interconnection lever 138. The interconnection lever 138 is held on a supporting plate 141 so as to be pivotal about its pivot hole 138a. The interconnection lever 138 has a hook 138b on its one end. The hook 138b is engaged with the hook 139 of the cartridge chamber bottom lid 135. A push-up protuberance 138c is formed on the opposite end of the interconnection lever 138.

The supporting plate 141 is mounted on a front side of a circuit board 30 of the flash device 17. The flash circuit board 30 has a plurality of circuit elements mounted on its rear side, and terminals of these elements are soldered on the front side. Furthermore, a metal contact 33 of a charge switch is mounted on the front side of the flash circuit board 30. The supporting plate 141 is mated tightly with the front side of the flash circuit board 30 to cover the soldered terminals. The metal contact 33 is exposed through an opening 141a of the supporting plate 141. A front surface of the supporting plate 141 is formed substantially flat and even, and a first sliding blade 140 and a second sliding blade 142 are mounted to the front of the supporting plate 141, so that the first and the second sliding blades 140 and 142 may slide on the front surface of the supporting plate 140. The flash charge button 8 is formed integrally with the second sliding blade 142.

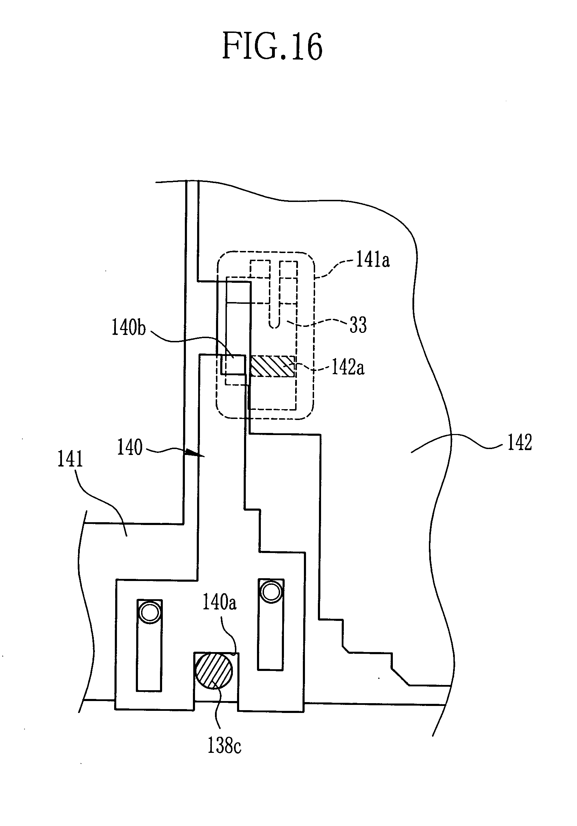

A switch pushing portion 140b protrudes rearward from the first sliding blade 140, whereas a pushing protuberance 142a is formed on a rear side of the second sliding blade 142. The switch pushing portion 140b and the pushing protuberance 142a are opposed to the metal contact 33 through an opening 141a of the supporting plate 141, as shown in Fig.16. As the flash charge button 8 is slid upward, the second sliding plate 142 moves together, and the pushing protuberance 142a pushes the metal contact 33 to turn the charge switch ON.

The first sliding blade 140 has a notch 140a on its bottom side. When the cartridge chamber bottom lid 135 is opened, the interconnection lever 138 rotates counterclockwise in Fig. 15, because of the engagement between the hook 138b and the hook 139 of the lid 135. Then, the push-up protuberance 138c moves into the notch 140a, and pushes up the first sliding blade 140. As the first sliding blade 140 slides up, the switch pushing portion 140b pushes the metal contact 33 to turn the flash charge switch ON.

The switch pushing portion 140b acts on the metal contact 33 at a different position from the pushing protuberance 142a. Therefore, once the cartridge chamber bottom lid 135 is opened, the metal contact 33 is held in the ON position independently of the position of the second sliding blade 142 and thus the operating position of the flash charge button 8.

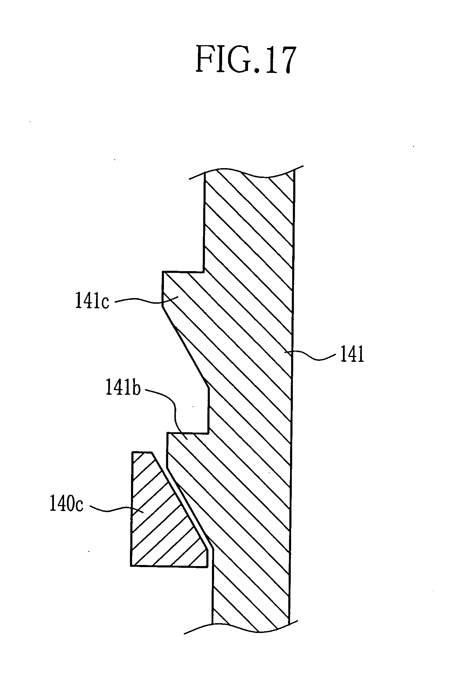

The supporting plate 141 is further provided with two protuberances 141b and 141c. The first sliding blade 140 has a claw 140c that is placed in a position as shown in Fig.17 while the cartridge chamber bottom lid 135 is closed. In cooperation with the protuberances 141b and 141c, the claw 140c prevents accidental movement of the first sliding blade 140, and thus prevents the flash charge switch from being turned ON unexpectedly. Such a trouble may otherwise be caused by some impact on the lens-fitted photo film unit 102.

The claw 140c and the protuberances 141b and 141c are substantially serrated, so they allow only upward movement of the first sliding blade 140. Once the claw 140c moves over the protuberances 141b and 141c with the upward movement of the first sliding blade 140, the first sliding blade 140 cannot move back. Accordingly, when the cartridge chamber bottom lid 135 is opened, the first sliding blade 140 is pushed up to turn the charge switch ON, and the first sliding blade 140 is locked to keep the charge switch in the ON position. In other words, the claw 140c and the protuberances 141b and 141c constitute a lock device for keeping the metal contact 33 in the ON position.

Now the operation of the lens-fitted photo film unit 102 will be described.

The lens-fitted photo film unit 102 is set ready for photography by turning the film winding wheel 14 so far as it is locked. To make flash photography, the flash charge button 8 is slid up for charging the flash device. Whether the charging of the flash device 17 is complete or not is indicated by the flash-ready indicator window 13. After each exposure, the remaining number of available exposures, as seen through the exposure counter window 12, decreases one by one.

After the last available exposure is taken, the winding-lock mechanism does not act on the film winding wheel 14, so that the film winding wheel 14 can rotate continually to wind up the whole length of the photographic film 26 into the film cartridge 25.

The used up lens-fitted photo film unit 102 is forwarded to a photo-lab for development and printing. In the photo-lab, the exposed photographic film 26 is removed. In order to remove the film cartridge 25 containing the exposed photographic film 26, the cartridge chamber bottom lid 135 is opened by thrusting a tool like a keystone tip screwdriver into between the cartridge chamber bottom lid 135 and the cartridge chamber 22. With the cartridge chamber bottom lid 135 being opened, the interconnection lever 138 rotates counterclockwise to push up the first sliding blade 140, so the switch pushing portion 140b pushes the metal contact 33 to turn the charge switch ON. Then the flash circuit starts charging while being supplied from the battery 41.

Once the switch pushing portion 104b turns the charge switch ON, the flash charge switch is kept in the ON position by virtue of the engagement between the claw 140c and the protuberances 141c and 141b, independently of any operation on the flash charge button 8. That is, once the cartridge chamber bottom lid 135 is opened to remove the film cartridge 25, the flash device 17 is kept being charged.

Consequently, the battery 41 of the emptied lens-fitted photo film unit 102 is discharged in several hours or within a day, depending upon how many times the flash photography has been done by that lens-fitted photo film unit 102. Therefore, the flash device 17 of the emptied lens-fitted photo film unit 102 will not work unless the discharged battery 41 is replaced with a new specific battery 41. Because the commercially available dry batteries are too large or too small for the lens-fitted photo film unit 102, it is impossible for a third party to substitute the specific battery 41. Even if the emptied lens-fitted photo film unit 102 is reloaded with a new strip of photographic film, the reloaded film unit will be worthless, because it can not take flash photography. As a result, the third party will not derive benefit from reloading the used film units and selling those reloaded film units.

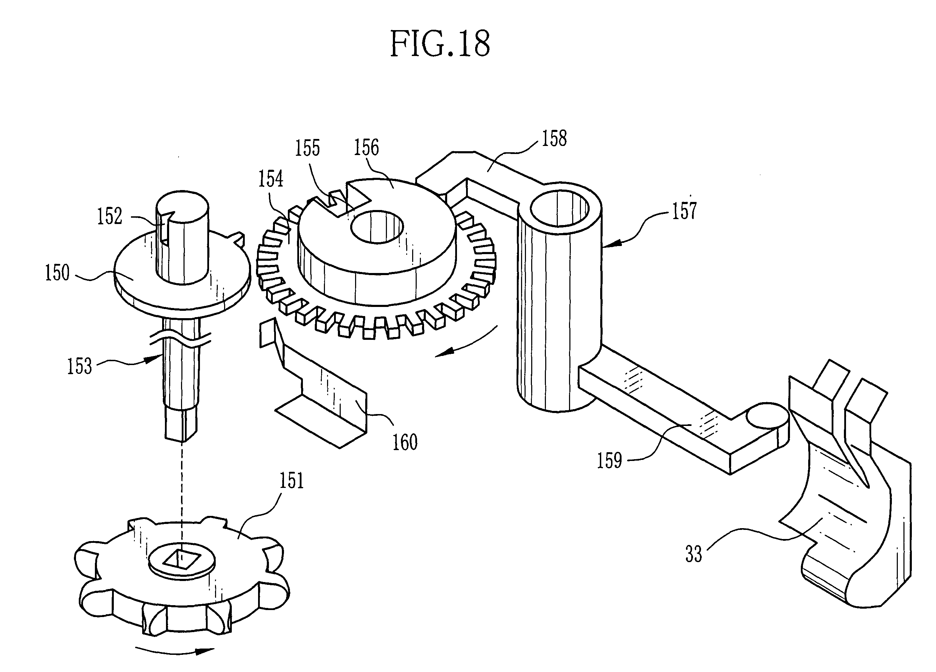

Next, a further embodiment of the present invention will be described with reference to Fig.18.

In this embodiment, a counter mechanism of a lens-fitted photographic film unit is used to initiate charging a flash device after the completion of all available exposures. Other configurations of the present embodiment are fundamentally the same as the above embodiments, so the description of these configurations will be skipped. In Fig. 18, designated by 151 is a sprocket that engages with perforations of photographic film. A rotary member 153 is coupled to the sprocket 151 so as to rotate together. The rotary member 153 is formed integrally with a counter notch 152 and a one-tooth gear 150. The counter notch 152 is used for advancing a not-shown counter dial by one scale each time the sprocket 151 makes one revolution. The sprocket 151 makes one revolution as the photographic film is fed by a length corresponding to one picture frame on the photographic film. The one-tooth gear 150 is in mesh with a timing gear 154, such that the timing gear 154 rotates by an angle corresponding to its one tooth each time the one-tooth gear 150 makes one revolution. The timing gear 154 is provided with a round disc portion 156 having a key notch 155.

When the key notch 155 reaches a predetermined position as a result of rotation of the timing gear 154, a key arm 158 of an interconnection lever 157 is trapped in the key notch 155. Then the interconnection lever 157 rotates counterclockwise in the drawing, so a pushing arm 159 of the interconnection lever 157 pushes a metal contact 33 of a flash charge switch, starting charging a flash circuit. A stopper blade 160 stops the timing gear 154 from moving unexpectedly, so that the timing gear 154 is advanced exactly by one-tooth amount at a time.

By determining an initial position of the timing gear 154 in accordance with the total number of available exposures for the lens-fitted photo film unit, it is possible to set up the interconnection lever 157 to turn the flash charge switch ON at the completion of all available exposures, or when the photographic film is completely wound into a film cartridge. The same preventive effect against the illegal reloading, as described with respect to the embodiment of Fig.15, is achieved by this embodiment.

The above embodiments are configured to use up the battery by starting to charge continually in response to a predetermined operation involved in the removal of the film cartridge in the photo-lab, or in response to the user's winding operation of the fully exposed photographic film. However, the present invention is not limited to these embodiments. Another operation performed after the completion of photography may be used as the predetermined operation to start consuming the contained battery. The predetermined operation may also be an operation on a specific operation member. For example, it is possible to provide an operation member for prohibiting a lens-fitted photo film unit from photographing, so that the user can express the will of ending the use of that film unit even while there remain still a number of available exposures.

Furthermore, the present invention is not to be limited to using the flash circuit for consuming the battery, but it is possible to provide a simple load circuit consisting of a resistor or a coil. Such a specific load circuit may be provided either on a circuit board of the flash device or on another place.

Although the present invention has been described with reference to those lens-fitted photo film units which contain an ISO 135-type photo film cartridge, the present invention is equivalently applicable to those lens-fitted photo film units which contain a photo film cartridge adapted to the advanced photographic system (APS), or those containing a photo film cartridge of specific size defined by a manufacturer for exclusive use in such lens-fitted photo film units.

As described so far, the present invention is not to be limited to the above embodiments, and all matter contained herein is illustrative and does not limit the scope of the present invention. Thus, obvious modifications may be made within the spirit and scope of the appended claims.

## Claims

1. A lens-fitted photo film unit (2) having simple photographic devices and an internal dark room (45) that includes an image tunnel (24), a film roll chamber (23) holding a roll of unexposed photographic film (26), and a cartridge chamber (22) holding a film cartridge (25) for winding up the photographic film (26) after each exposure, said lens-fitted photo film unit comprising:
a specific battery (41) used as a power source, said specific battery (41) having a different size or shape from International Standards; and
a hollow protrusion (19a, 55) formed adjacently to at least one of end faces of said specific battery (41), said hollow protrusion having a hollow (50, 56) that joins with said dark room (45).

2. A lens-fitted photo film unit as claimed in claim 1, wherein said specific battery (41) is substantially cylindrical and has a diameter from 9 mm to 15 mm, and an axial length of 40 mm or less.

3. A lens-fitted photo film unit as claimed in claim 1, wherein at least a portion of said hollow (50, 56) is located in a distance from the opposite end face of said specific battery (41) to said hollow protrusion (19a, 55), said distance ranging from L + 1 mm to L + 15 mm, wherein L is an axial length of said specific battery (41).

4. A lens-fitted photo film unit as claimed in claim 3, wherein at least an internal wall surface (50a, 56a) of said hollow protrusion (19a, 55) is located in a distance from said opposite end face, the distance ranging from L + 1 mm to L + 15 mm.

5. A lens-fitted photo film unit as claimed in claim 1, wherein said specific battery (41) is located below said image tunnel (24) between said film roll chamber (23) and said cartridge chamber (22), and said hollow protrusion (19a, 55) is formed adjacently to at least one of said film roll chamber (23) and said cartridge chamber (22).

6. A lens-fitted photo film unit (102) provided with simple photographic devices, a flash device (17), a film roll chamber (23) holding a roll of unexposed photographic film (26), and a cartridge chamber (22) holding a film cartridge (25) for winding up the photographic film (26) after each exposure, said lens-fitted photo film unit (102) comprising:
a primary battery (41) used as a power source for said flash device (17), said battery (41) having a different size or shape from International Standards;
a load circuit (30) for consuming said battery (41) up to full capacity;
a switch (33) for connecting said load circuit (30) to said battery;
an interconnection device (38) that acts on said switch (33) to connect said load circuit (30) to said battery (41) in cooperation with a predetermined operation made after the completion of photography; and
a locking device (140c, 141c) for locking said switch (33) in a position connecting said load circuit (30) to said battery (41).

7. A lens-fitted photo film unit as claimed in claim 6, further comprising a charge switch (33) that is switched between an ON position for starting charging said flash device (17), and an OFF position for terminating charging said flash device (17), and an operation member (8) externally operable to switch over said charge switch (33), wherein
said load circuit is a flash circuit (30) of said flash device (17), and said switch is said charge switch (33), and wherein said locking device (140c, 141c) disables said operation member (8) from switching over said charge switch (33) after said interconnection device (138) acts on said charge switch (33) to move to the ON position.

8. A lens-fitted photo film unit as claimed in claim 7, further comprising a lid (135) that is to be opened to remove said film cartridge (25) from said cartridge chamber (22), wherein said interconnection device (138) acts on said charge switch (33) to move to the ON position in cooperation with said lid (135) being opened.

9. A lens-fitted photo film unit as claimed in claim 8, wherein said interconnection device comprises an interconnection lever (138) having a first end (138a) engaged with said lid (135), said interconnection lever (138) rotating with said lid (135) being opened, and a sliding member (140) coupled to a second end (138c) of said interconnection lever (138) such that said sliding member (140) slides to move said charge switch (33) to the ON position as said interconnection lever (138) rotates.

10. A lens-fitted photo film unit as claimed in claim 7, wherein said interconnection device (138) turns said charge switch (33) ON when said photographic film (26) is fully wound into said film cartridge (25).

11. A lens-fitted photo film unit as claimed in claim 7, further comprising a sprocket (151) that is engaged in perforations (26b) of said photographic film (26) and rotates following said photographic film (26) while said photographic film (26) is being wound into said film cartridge (25), and an exposure counter mechanism (150, 154) that detects the rotation of said sprocket (151) to count the number of exposures done on said photographic film (26), wherein said interconnection device (138) cooperates with said exposure counter mechanism ( 150, 154), and brings said charge switch (33) to the ON position when said photographic film (26) has been wound into said film cartridge (25) by a length corresponding to a predetermined number of exposures.

12. A lens-fitted photographic film unit as claimed in claim 6, wherein said primary battery (41) is a cylindrical alkaline manganese battery, and has an axial length from 24 mm to 38 mm and a diameter from 9.5 mm to 10.5 mm.

13. A battery for use in a lens-fitted photo film unit, said battery comprising:
a plurality of positive electrolytes (62a-62c) of a ring shape, at least one (62c) of said positive electrolytes being different in size from others of said positive electrolytes (62a, 62b);
a negative electrolyte (63) placed in said positive electrolytes (62a-62c);
a separator (64) placed between said positive electrolytes (62a-62c) and said negative electrolyte (63) so as to isolate said positive electrolytes (62a-62c) and said negative electrolyte (63) from each other; and
a casing (65) for containing and sealing said positive and negative electrolytes (62a-62c, 63) and said separator (64).

14. A battery as claimed in claim 13, wherein at least one (62c) of said plurality of positive electrolytes (62a-62c) is formed to be different in axial length from others.

15. A battery as claimed in claim 13, wherein at least one (90c) of said plurality of positive electrolytes (90a-90c) is formed to be different in external diameter from others.

16. A battery as claimed in claim 13, wherein said casing (65) is substantially cylindrical and has an external diameter from 9 mm to 15 mm, and an axial length from 24 mm to 40 mm.

17. A battery as claimed in claim 13, wherein a positive side end face (82) of said casing (83) is a perpendicular plane to an axial direction of said casing (83), and said casing (83) has an external diameter from 9 mm to 11 mm, and an axial length from 22 mm to 38 mm.

18. A battery as claimed in claim 13, wherein said casing (92) is formed to have a positive side cylinder portion (92a) and a negative side cylinder portion (92b) having a larger diameter than said positive side cylinder portion (92a).

19. A battery as claimed in claim 18, wherein said positive side cylinder portion (92a) and said negative side cylinder portion (92b) are connected through a conic portion (92c), said conic portion (92c) increasing in diameter from said positive side cylinder portion (92a) toward said negative side cylinder portion (92b).

20. A battery as claimed in claim 13, wherein a positive electrode (42) is formed as an axially protruding convexity on the positive side end face of said casing (68).

21. A battery as claimed in claim 13, wherein a positive electrode (89) is formed as a concavity in the positive side end face (89a) of said casing (88).

22. A battery as claimed in claim 13, wherein a positive side end face (85b) of said casing (85) comprises an axially protruding portion (84a) and a recessed portion (86).

23. A battery as claimed in claim 13, wherein said casing (65) comprises a case shell (68) having an opening in a negative side end face, and a sealing device (69) for sealing said opening of said case shell (68), said sealing device (69) using a hydrogen permeable gasket (77).

24. A battery as claimed in claim 13, wherein said battery (41) is provided on an externally visible position with a warning (44a) that said battery (41) is for exclusive use in a predetermined lens-fitted photo film unit.

25. A battery as claimed in claim 13, wherein said battery (41) is provided with signs (44b, 44c) indicating the positive side and the negative side of said battery.

26. A battery as claimed in claim 13, wherein those of said positive electrolytes (62a-62c) having the same size are equal in size to positive electrolytes used in a conventional battery of a standardized size.
